(19) **Europäisches Patentamt / European Patent Office / Office européen des brevets**

(11) **EP 1 760 925 A2**

(12) **EUROPEAN PATENT APPLICATION**

(43) Date of publication:
**07.03.2007 Bulletin 2007/10**

(51) Int Cl.:
***H04L 1/00*** (2006.01)

(21) Application number: **06120115.8**

(22) Date of filing: **05.09.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **05.09.2005 EP 05019244**

(71) Applicant: **SIEMENS AKTIENGESELLSCHAFT 80333 München (DE)**

(72) Inventors:
- **Döttling, Martin**
  **85579 Neubiberg (DE)**
- **Hindelang, Thomas**
  **82256 Fürstenfeldbruck (DE)**
- **Lobinger, Andreas**
  **83714 Miesbach (DE)**
- **Michel, Jürgen**
  **81737 München (DE)**
- **Raaf, Bernhard**
  **82061 Neuried (DE)**
- **Viering, Ingo**
  **81539 München (DE)**

(54) **Method and system for providing feedback information in a radio communication system**

(57) According to the invention, a method for providing feedback information between at least one user terminal and at least one base station of a radio communication system is proposed. The method is characterised in that a continuous value function is used as feedback information for the selection of a modulation and/or coding scheme.

FIG 1

EP 1 760 925 A2

**Description**

The invention related to a method for providing feedback information in a radio communication system.

Future OFDM-based cellular systems, discussed e.g. in the so called 3G long-term evolution (LTE) project within the 3GPP (3rd Generation Partnership Project) standardisation of evolutions of UMTS (Universal Mobile Telecommunications System), are intended to use so called channel-dependent scheduling. The scheduling units are called chunks and span a number of adjacent OFDM symbols in time and frequency, e.g. according to coherence time and frequency or according to a required predefined size. In order to define chunks, so called channel quality indicators (CQI) are required. CQI is a partial channel state information which contains e.g. information about SINR (Signal to Interference Noise Ratio) and/or applicable modulation and coding schemes (MCS) for a given performance target. Ideally, such CQI values are required as feedback information from user terminals for all allocated chunks in order to control the configuration and/or allocation of chunks at the scheduling network entity.

Nevertheless, such continuous transmissions of CQI reports in uplink (UL) direction would lead to a substantial signalling overhead, which in turn prohibits the usage of known signalling procedure used e.g. for the feature HSDPA (High Speed Downlink Packet Access) in the 3GPP UMTS standard.

In the framework of the standardisation of the so called Wi-MAX standard (IEEE 802.16), it is discussed to apply feedback compression methods which use vector quantisation, Householder method, Givens rotation (see e.g. http://www.ieee802.org/16/tge/contrib/C80216e-04_516.pdf) and possibly including further optimisations using e.g. delta modulation. These methods are intended to be used for providing efficient feedback information of channel eigenvalues.

However, feedback information, i.e. CQI, for link adaptation in a chunk-based OFDM system would consist of a substantially larger amount of values with different correlation properties in frequency and time. It was therefore proposed, firstly to provide feedback on a SINR per chunk basis instead of MCS, since this would allow to apply lossy continuous-amplitude compression algorithms whereas MCS transmission would require less efficient discrete-amplitude compression algorithms, and secondly to apply a compression of SINR using a lossy continuous-amplitude compression algorithm in the frequency domain as well as a subsequent subsampling to exploit correlation in time

While providing good compression properties, the above solutions would have the disadvantages that it is not evident for the transmitting network entity to determine from a SINR feedback an appropriate modulation and coding scheme to be assigned to the corresponding user terminal, since each terminal might have different receiver capabilities and therefore no one-to-one mapping would be possible. Consequently, the network entity would be required to know the mapping function for each possible user terminal, which in turn would require additional signalling as well as storage and processing capacities at the network entity.

Therefore, if only CQI knowledge is of interest, MCS information might be preferred compared to SINR information. On the other hand, SINR does also not comprise of complete channel state information, whereas for several functionalities besides link adaptation, complete CSI (Channel State Information), i.e. the complex-valued channel coefficients, is required.

It is therefore an object of the present invention to provide a method for providing feedback information in an efficient way. This object is solved by the features of independent claim 1. Further advantageous solutions are disclosed in dependent claims.

According to the invention, feedback information between at least one user terminal and at least one base station in a radio communication system is provided as values of a function.

According to a first aspect of the invention, the values of a function represent interpolations of discrete values.

According to a second aspect of the invention, based on the feedback information, a modulation and/or coding for a communication between the at least one user terminal and the at least one base station is selected.

According to a third aspect of the invention the feedback values are compressed using a continuous-amplitude compression method.

Components of a radio communication system comprise of means for implementing the method according to any of the claims.

The present invention will become more apparent from the description and embodiments given herein below and from the accompanying drawings which are given by way of information only, and thus are not limitative of the present invention, and wherein:

FIG 1     depicts a communications system wherein the inventive technique is applicable, and

FIG 2     shows a graph with simulation results.

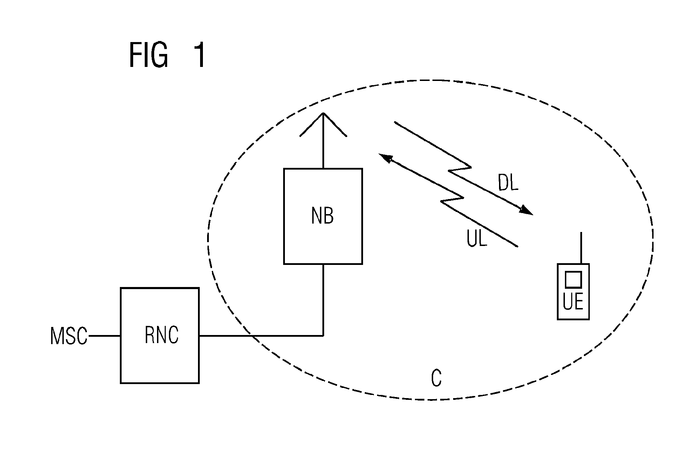

FIG 1 shows exemplary components in a radio communication system, e.g. a system based on the UMTS standard or evolutions thereof. A base station NB (NodeB) provides radio communication to a user terminal UE (User Equipment) in a radio cell C. Signals and information are transmitted in uplink UP and downlink DL direction between the base station NB and the user terminal UE over the air interface. The base station NB is furthermore connected to a radio network controller RNC which in turn is connected inter alia to a mobile switching centre MSC. For evolutions of the UMTS standards, the functionalities of the radio network controller RNC is likely to be integrated into the base station NB and a central network node, thus replacing the today's functionality of the RNC and MSC.

As described above, the discrete MCS assigned to connection in known systems depends on determined SINR values of pilot signals received by a user terminal as well as on expected power for the data channel to be set up. For the HSDPA feature in UMTS, a power relation g between the pilot channel and the data channel (in this case the HS-PDSCH) is signalled by the network. Nevertheless, although the factor g is still taken into account for the MCS selection, the power actually used for the data channel may still be decided by the base station to be different from the signalled value g. Apart from these parameters, the choice of the MCS may also depend on further parameters like e.g. the channel impulse response. In MIMO (Multiple Input Multiple Output) scenarios employing several antennas at both the base station and the user terminal, it may also depend on particular correlations of channels between each pair of transmit (TX) and receive (RX) antennas.

In the following exemplary description of the present invention, it is assumed that the MCS is selected solely depending on the parameters SINR and g. Nevertheless, further parameters may also be considered. According to known systems as discussed above, a user terminal UE would thus feed back CQI, i.e. SINR and g, as discrete integer values. In contrast, according to one aspect of the present invention, such feedback information is replaced by a continuous value function f, wherein the value of f is defined as follows.

The better the channel quality is compared to a minimum channel quality allowing for the use of the signalled MCS, the larger is the difference between f and MCS, wherein the integer part of f is equal to MCS, i.e. int(f)= MCS. Alternatively, it may also be considered that the more the transmit power of the data channel can be reduced compared to the signalled value g, while still using the same value of MCS, the larger is the difference between f and MCS.

From the above, f may be derived as follows. It is assumed that the value MCS(SNIR,g) may still be used if the value of g is reduced to gmin, wherein gmin is a minimum value, resulting in

$$\mathtt{MCS(SNIR,gmin)\ =\ MCS(SNIR,g)}$$

It is furthermore assumed that the value MCS(SNIR,g)+1 may be used once the value of g is increased to gmax, wherein gmax is the minimum value, resulting in

$$\mathtt{MCS(SNIR,gmax)\ =\ MCS(SNIR,g)+1}$$

Accordingly, one possible example of a definition of f is

$$\mathtt{f(SNIR,g)\ =\ MCS(SNIR,g)\ +\ (g-gmin)/(gmax-gmin)}$$

It should be noted from the above given definitions, that gmin is not defined for the lowest MCS and that gmax is not defined for the highest MCS. However, suitable definitions can be found via extrapolation:

$$\mathtt{gmin0\ =\ 2*gmin1\ -\ gmax1}$$

wherein gmin0 is an extrapolated value of gmin for the minimum MCS, and gmin1 and gmax1 are gmin and gmax for the subsequent MCS.

Similarly, gmax for the maximum MCS may be extrapolated from the values of the last but one MCS:

$$gmaxm = 2 \ gmaxm1-gminm1$$

wherein gmaxm is an extrapolated value of gmax for the maximum MCS, and gminm1 and gmaxm1 are gmin and gmax for the second largest MCS.

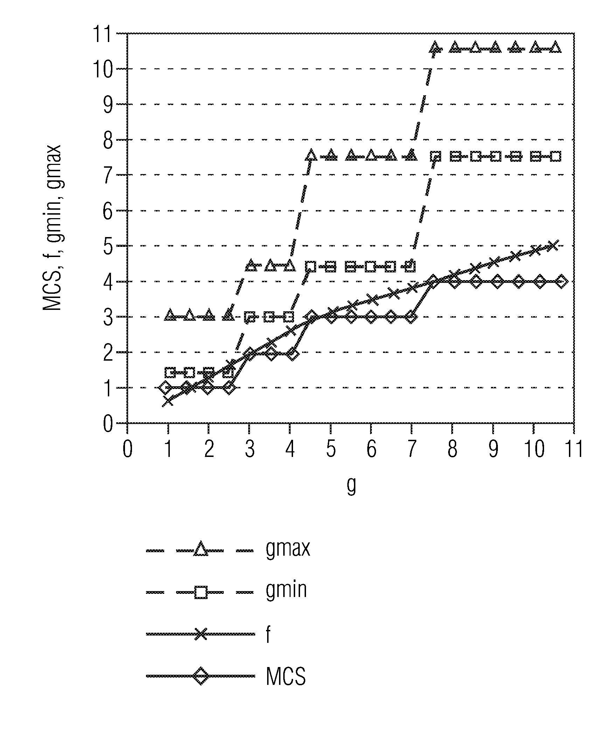

The graph in FIG 2 shows a plot of MCS and f values over g for a specific value of SINR, wherein an example of only 4 MCS levels 1 to 4 and a resolution of 1 for g is given. Apparently, a larger number of MCS levels can be used as well and there is no need for a specific discretisation of g.

Typically, if the SINR increases by a certain amount, the same MCS will result as if instead, g was increased by the same amount. The reason for this is that in both cases the received signal strength of the data channel and thus the signal to noise ratio on the data channel is increased by the same amount. Such equivalence may not be perfect, depending on the specific implementation and performance of the user terminal UE in such cases, nevertheless, a plot of f and MCS over SNIR would still look very similar to the plot depicted in FIG 2. Thus, f interpolates smoothly between the steps of the MCS function.

Subsequently, an efficient lossy continuous amplitude compression algorithm is applied. At the receiver side, a decompression and a receive mapping function R for mapping values of the continuous value function f to the discrete value MCS are performed, i.e. for chunk i:

$$MCS(i) = R(f(i))$$

In case the MCSs are represented by integer values, M may simply be a truncation to the next lower integer value, also called floor function. The non-integer part of f may also be used to prioritise between those user terminals to which the same MCS value was assigned. Furthermore, this value may also be used to reduce the necessary signal transmit power by selecting the value g used for the actual transmission to match the value of gmin, i.e. to use the minimum transmit power necessary for the given MCS.

Since the transmitter of the feedback information, i.e. the user terminal, has knowledge about the mapping function M applied at the receiver of the feedback information, i.e. the base station, it can also calculate the effective result including possible deviations due to the lossy compression. Therefore, either the transmit mapping function can be designed (or even adapted) in a way that such errors are prevented or that they occur at less relevant parts of the CQI information, e.g. at chunks in a bad state, which are most likely being assigned to another user terminal, anyway.

The present invention is advantageous in that the high compression rate of continuous amplitude compression methods is preserved while at the same time MCS information is transmitted, since the MCS information contains a superposition of received SINR and receiver performance. Therefore, the network doesn't need to be aware of specific mapping functions between SINR values and a given target performance, e.g. target BLER (Block Error Rate), for each individual user terminal.

According to another aspect of the invention, a method for an efficient compression of complete CSI is proposed in case the CQI reporting alone is not sufficient for applying the MCS.

Based on common pilots in an OFDM-based system, the receiver knows the frequency response of the channel H(f), from which, by means of an IFFT (Inverse Fast Fourier Transformation), the channel impulse response h($\tau$) is obtained. Subsequently, the most significant channel taps are identified, using e.g. a relative or absolute threshold. Supposed that L significant taps exist, the information is contained in L complex values and L integer values, which correspond to time delays in units of the sampling rate. One tap is then normalised to a magnitude of one and all delays are transmitted as relative delays with respect to the first tap, therefore 2(L-1) real values and L-1 integer values need to be transmitted. Optionally, the number of bits representing these values can be adapted according to the magnitude of the corresponding tap, i.e. for the most relevant taps, a higher resolution (more bits) is used than for the others taps. As a further option, further source coding and compression algorithms may be applied to the resulting data.

From this information, it is possible to reconstruct the original frequency response at the receiver side. If the absolute level is also of interest (as is the case e.g. for CQI), the normalisation factor mentioned above should be transmitted as well. Feedback of the time domain impulse response has the advantage that frequency correlation is inherently considered, i.e. only a few relevant taps exist normally. Therefore, a high compression is achieved while maintaining the full channel state information.

This approach is advantageous in that instead of only partial channel knowledge, in case of CQI representing only a magnitude of the determined channel quality, the transmitter obtains access to complete channel knowledge (CSI, complex value information), which enables a user-specific processing, e.g. user-specific spatial processing such as beamforming or the application of multi-user precoding techniques. Furthermore, signalling overhead caused by the additional feedback information may be traded off with accuracy by appropriately adapting the above mentioned threshold for including taps into the feedback information.

**Claims**

1. Method for providing feedback information between at least one user terminal and at least one base station in a radio communication system, **characterised in that** values of a function are provided as feedback information.

2. Method according to claim 1, wherein
   the values of a function represent interpolations of discrete values.

3. Method according to claim 1 or 2, wherein
   based on the feedback information, a modulation and/or coding for a communication between the at least one user terminal and the at least one base station is selected.

4. Method according to any preceding claim, wherein
   the feedback values are compressed using a continuous-amplitude compression method.

5. User terminal in a radio communication system, comprising means for determining and providing feedback information to at least one base station of the radio communication system as values of a function.

6. Radio communication system, comprising of at least one user terminal and at least one base station, each comprising means for realising the method according to any of the preceding claims.

FIG 1